# EUROPEAN PATENT APPLICATION

(11) **EP 4 836 483 A1**
(43) Date of publication of application: **04.11.2026**
(21) Application number: 23962928.0
(22) Date of filing: 29.12.2023
(51) Int. Cl.: H04W 16/28

(54) **COMMUNICATION METHOD, TERMINAL, NETWORK DEVICE AND COMMUNICATION SYSTEM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/143620
(87) International publication number: WO 2025/138254

(57) **Abstract**

The present disclosure relates to a communication method, a terminal, a network device and a communication system. The communication method comprises: when a first condition is satisfied, a terminal sending first information, the first information being used for determining a first QCL parameter. According to embodiments of the present disclosure, the reporting of a beam report based on event triggering can be realized, thereby reducing the signaling overhead.

## Description

### TECHNICAL FIELD

The present disclosure relates to the technical field of communication, and in particular, to a communication method, a terminal, a network device, and a communication system.

### BACKGROUND

In the New Radio (NR), especially in the operating frequency range 2, beam-based transmission and reception are required to ensure coverage range.

### SUMMARY

How to implement event-triggered beam report and how to reduce signaling overhead and latency are issues that need to be addressed.

The embodiments of the present disclosure provide a communication method, a terminal, a network device, and a communication system.

According to a first aspect of the embodiments of the present disclosure, a communication method is proposed, the method including: in a case that a first condition is met, sending, by a terminal, first information to a network device, where the first information is used to determine a first QCL parameter.

According to a second aspect of the embodiments of the present disclosure, a communication method is proposed, the method including: in a case that a first condition is met, receiving, by a network device, first information sent by a terminal, where the first information is used to determine a first QCL parameter.

According to a third aspect of the embodiments of the present disclosure, a communication method is proposed, the method including: in a case that a first condition is met, a terminal sending first information, where the first information is used to determine a first QCL parameter; and a network device receiving the first information sent by the terminal.

According to a fourth aspect of the embodiments of the present disclosure, a terminal is proposed, including: a transceiver module, configured to send first information in a case that a first condition is met, where the first information is used to determine a first QCL parameter.

According to a fifth aspect of the embodiments of the present disclosure, a network device is proposed, including: a transceiver module, configured to obtain first information in a case that a first condition is met, where the first information is used to determine a first QCL parameter.

According to a sixth aspect of the embodiments of the present disclosure, a terminal is proposed, including: one or more processors; where the processor is configured to execute the communication method of the first aspect.

According to a seventh aspect of the embodiments of the present disclosure, a network device is proposed, including: one or more processors; where the processor is configured to execute the communication method of the second aspect.

According to an eighth aspect of the embodiments of the present disclosure, a communication system is provided, including a terminal and a network device, where the terminal is configured to implement the communication method of the first aspect, and the network device is configured to implement the communication method of the second aspect.

According to a ninth aspect of the embodiments of the present disclosure, a storage medium is provided, where the storage medium stores instructions, and when the instructions are executed on a communication device, the communication device executes the communication method of any one of the first aspect and the second aspect.

Through the embodiments of the present disclosure, event-triggered beam report can be implemented, thereby reducing signaling overhead.

### BRIEF DESCRIPTION OF THE DRAWINGS

In order to more clearly illustrate the technical solutions in the embodiments of the present disclosure, the drawings required for describing the embodiments are introduced below. The following drawings are only some embodiments of the present disclosure and do not impose specific limitations on the protection scope of the present disclosure.
FIG. 1 is a schematic diagram of an architecture of a communication system according to an embodiment of the present disclosure.
FIG. 2 is an interactive schematic diagram of a communication method according to an embodiment of the present disclosure.
FIG. 3 is a flowchart of a communication method according to an embodiment of the present disclosure.
FIG. 4A is a flowchart of a communication method according to an embodiment of the present disclosure.
FIG. 4B is a flowchart of a communication method according to an embodiment of the present disclosure.
FIG. 5 is an interactive schematic diagram of a communication method according to an embodiment of the present disclosure.
FIG. 6A is a schematic diagram of a structure of a terminal proposed in an embodiment of the present disclosure.
FIG. 6B is a schematic diagram of a structure of a network device proposed in an embodiment of the present disclosure.
FIG. 7A is a schematic diagram of a structure of a communication device proposed in an embodiment of the present disclosure.
FIG. 7B is a schematic diagram of a structure of a chip proposed in an embodiment of the present disclosure.

### DETAILED DESCRIPTION

The embodiments of the present disclosure provide a communication method, a terminal, a network device, and a communication system.

In the first aspect, an embodiment of the present disclosure proposes that in the case that a first condition is met, the terminal sends first information to the network device, where the first information is used to determine a first QCL parameter.

In the above embodiment, the first information is sent in a case that an event is triggered, thus the first QCL parameter in this case is determined based on the content of the first information. Therefore, the first QCL parameter to be switched or adjusted can be clearly identified.

In combination with some embodiments of the first aspect, in some embodiments, the first information includes: an identifier of a first reference signal resource, the first reference signal resource being a reference signal resource corresponding to the first QCL parameter; a unified transmission configuration indication (TCI) state type; an applicable scope of the TCI state corresponding to the first reference signal resource; an event identifier, where the event is an event that triggers the terminal to send the first information; and a parameter corresponding to the first reference signal resource.

In the above embodiment, the first QCL parameter to be selected can be determined through the above content included in the first information, thereby avoiding the situation where the first QCL parameter cannot be determined due to insufficient or missing information.

In combination with some embodiments of the first aspect, in some embodiments, the identifier of the first reference signal resource includes: a synchronization signal block (SSB) identifier, and/or a channel state information reference signal (CSI-RS) identifier.

In the above embodiment, based on this, it is possible to determine the corresponding first QCL parameter through the identifier of the reference signal resource.

In combination with some embodiments of the first aspect, in some embodiments, in the case that the SSB identifier is a non-serving cell, the first information includes an index of the non-serving cell in the physical cell identifier (PCI) list.

In combination with some embodiments of the first aspect, in some embodiments, the type of the unified TCI state includes:
a joint TCI state, and/or separate TCI state.

In the above embodiment, the first information includes content of the unified TCI state type, so that the determination of the unified type of the beam can be achieved.

In combination with some embodiments of the first aspect, in some embodiments, the TCI state is represented based on the reported first reference signal resource, and the applicable scope of the TCI state includes at least one of the following: a joint TCI state; a downlink TCI state; an uplink TCI state.

In combination with some embodiments of the first aspect, in some embodiments, the applicable scope of the TCI state includes the uplink TCI state or the joint TCI state, and the first information includes at least one of the following items corresponding to the first reference signal resource: a power headroom; a power backoff value; a supported maximum number of antenna ports of sounding reference signal (SRS).

In the above embodiment, the reason for determining the first QCL parameter can be inferred by referring to the specific content corresponding to the reference signal resource.

In combination with some embodiments of the first aspect, in some embodiments, each first reference signal resource corresponds to at least one event identifier.

In the above embodiments, the same reference signal resource can be used for different event trigger types.

In combination with some embodiments of the first aspect, in some embodiments, the parameter corresponding to the first reference signal resource includes at least one of the following: a layer 1 reference signal received power (L1-RSRP) corresponding to the first reference signal resource; a layer 1 signal to interference plus noise ratio (L1-SINR) corresponding to the first reference signal resource.

In combination with some embodiments of the first aspect, in some embodiments, the first information is carried in second information, and the second information is information for random access.

In the above embodiment, the network device can determine the first QCL parameter through the second information.

In combination with some embodiments of the first aspect, in some embodiments, the random access procedure corresponding to the second information includes at least one of the following: a contention free based random access; a contention based random access.

In combination with some embodiments of the first aspect, in some embodiments, the first information is carried in a scheduling request.

In the above embodiment, the network device can determine the first QCL parameter through the scheduling request.

In combination with some embodiments of the first aspect, in some embodiments, the scheduling request has a first mapping relationship with the CSI-RS, or the scheduling request has a second mapping relationship with the SSB.

In the above embodiment, the network device can determine the corresponding SSB or CSI-RS based on the scheduling request and the mapping relationship corresponding to the SSB or CSI-RS, and then determine the first QCL parameter corresponding to the SSB or CSI-RS identifier.

In combination with some embodiments of the first aspect, in some embodiments, the first information is carried in the scheduling request and a physical uplink shared channel medium access control control element (PUSCH MAC CE), where the scheduling request is a scheduling request for beam report.

In combination with some embodiments of the first aspect, in some embodiments, the first information is carried in a configured grant physical uplink shared channel (PUSCH), or a physical uplink control channel (PUCCH).

In combination with some embodiments of the first aspect, in some embodiments, the first condition includes an event configured by the network device.

In the second aspect, an embodiment of the present disclosure provides a communication method, the method including:

in a case that the first condition is met, the network device receiving first information sent by the terminal, where the first information is used to determine a first QCL parameter.

In the above embodiment, in the case that an event is triggered, the network device obtains information for determining the first QCL parameter, thereby achieving determination of the first QCL parameter.

In combination with some embodiments of the second aspect, in some embodiments, the first information includes at least one of the following: an identifier of a first reference signal resource, the first reference signal resource being a reference signal resource corresponding to the first QCL parameter; a unified transmission configuration indication (TCI) state type; an applicable scope of the TCI state corresponding to the first reference signal resource; an event identifier, the event being an event that triggers the terminal to send the first information; and a parameter corresponding to the first reference signal resource.

In combination with some embodiments of the second aspect, in some embodiments, the identifier of the first reference signal resource includes: a synchronization signal block (SSB) identifier, and/or a channel state information reference signal (CSI-RS) identifier.

In combination with some embodiments of the second aspect, in some embodiments, in the case that the SSB identifier is a non-serving cell, the first information includes the index of the non-serving cell in the physical cell identifier (PCI) list.

In combination with some embodiments of the second aspect, in some embodiments, the type of the unified TCI state includes: a joint TCI state, and/or a separate TCI state.

In combination with some embodiments of the second aspect, in some embodiments, the TCI state is represented based on the reported first reference signal resource, and the applicable scope of the TCI state includes at least one of the following: a joint TCI state; a downlink TCI state; an uplink TCI state.

In combination with some embodiments of the second aspect, in some embodiments, the applicable scope of the TCI state includes the uplink TCI state or the joint TCI state, and the first information includes at least one of the following items corresponding to the first reference signal resource: a power headroom; a power backoff value; the supported maximum number of antenna ports of sounding reference signal (SRS).

In combination with some embodiments of the second aspect, in some embodiments, each first reference signal resource corresponds to at least one event identifier.

In combination with some embodiments of the second aspect, in some embodiments, the parameter corresponding to the first reference signal resource include at least one of the following: the layer 1 reference signal received power (L1-RSRP) corresponding to the first reference signal resource; the layer 1 signal to interference plus noise ratio (L1-SINR) corresponding to the first reference signal resource.

In combination with some embodiments of the second aspect, in some embodiments, the first information is carried in second information, and the second information is information for random access.

In combination with some embodiments of the second aspect, in some embodiments, the random access procedure corresponding to the second information includes at least one of the following: a contention free based random access; a contention based random access.

In combination with some embodiments of the second aspect, in some embodiments, the first information is carried in a scheduling request.

In combination with some embodiments of the second aspect, in some embodiments, the scheduling request has a first mapping relationship with the CSI-RS, or the scheduling request has a second mapping relationship with the SSB.

In combination with some embodiments of the second aspect, in some embodiments, the first information is carried in the scheduling request and a physical uplink shared channel medium access control control element (PUSCH MAC CE), where the scheduling request is a scheduling request for beam report.

In combination with some embodiments of the second aspect, in some embodiments, the first information is carried in a configured grant physical uplink shared channel (PUSCH) configured, or a physical uplink control channel (PUCCH).

In combination with some embodiments of the second aspect, in some embodiments, the first condition includes an event configured by the network device.

In the third aspect, an embodiment of the present disclosure proposes a communication method, which includes: in a case that a first condition is met, the terminal sending first information, where the first information is used to determine a first QCL parameter; and a network device receiving the first information sent by the terminal.

In the fourth aspect, an embodiment of the present disclosure proposes a terminal, including: a transceiver module, configured to send first information in a case that a first condition is met, where the first information is used to determine a first QCL parameter.

In the fifth aspect, an embodiment of the present disclosure proposes a network device, including: a transceiver module, configured to obtain first information in a case that a first condition is met, where the first information is used to determine a first QCL parameter.

In the sixth aspect, an embodiment of the present disclosure proposes a terminal, including: one or more processors; where the processor is configured to execute the communication method of the first aspect.

In the seventh aspect, an embodiment of the present disclosure proposes a network device, including: one or more processors; where the processor is configured to execute the communication method of the second aspect.

In the eighth aspect, an embodiment of the present disclosure proposes a communication system, including: a terminal and a network device, where the terminal is configured to implement the communication method of the first aspect, and the network device is configured to implement the communication method of the second aspect.

In the ninth aspect, an embodiment of the present disclosure proposes a storage medium storing instructions, which, when executed on a communication device, enables the communication device to execute any one of the communication methods of the first aspect and the second aspect.

It can be understood that the above-mentioned terminal, access network device, first network element, second network element, core network device, communication system, storage medium, program product, computer program, chip or chip system are all configured to execute the methods proposed in the embodiments of the present disclosure. Therefore, the beneficial effects that can be achieved can refer to the beneficial effects in the corresponding methods, which will not be repeated here.

The embodiments of the present disclosure provide a communication method, a terminal, a network device, and a system. In some embodiments, the terms such as communication method, information processing method, data processing method, etc. can be interchangeable, the terms such as communication apparatus, information processing apparatus, data processing apparatus, etc. can be interchangeable, and the terms such as information processing system, communication system, etc. can be interchangeable.

The embodiments of the present disclosure are not exhaustive, but are merely illustrative of some embodiments, and are not intended to be a specific limitation on the scope of protection of the present disclosure. In the absence of contradiction, each step in a certain embodiment can be implemented as an independent embodiment, and the steps can be combined arbitrarily. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined. In addition, the embodiments can be combined arbitrarily. For example, some or all steps of different embodiments can be combined arbitrarily, and a certain embodiment can be combined with the optional implementations of other embodiments arbitrarily.

In each embodiment of the present disclosure, unless otherwise specified or there is a logical conflict, the terms and/or descriptions between the embodiments are consistent and can be referenced to each other, and the technical features in different embodiments can be combined to form a new embodiment according to their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a/an", "one", "the", "the above", "said", "aforementioned", "this", etc., may mean "one and only one", or "one or more", "at least one", etc. For example, when using articles such as "a", "an", "the" in English in translation, the noun after the article may be understood as a singular expression or a plural expression.

In the embodiments of the present disclosure, "a plurality of" refers to two or more.

In some embodiments, the terms such as "at least one of", "one or more", "a plurality of", "multiple", etc. can be used interchangeably.

In some embodiments, "at least one of A and B", "A and/or B", "A in one case, B in another case", "in response to one case, A, in response to another case, B", etc., may include the following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are more branches such as A, B, C, etc., the above is also similar.

In some embodiments, the recording method of "A or B" may include the following technical solutions according to the situation: in some embodiments, A (A is executed independently of B); in some embodiments, B (B is executed independently of A); in some embodiments, execution is selected from A and B (A and B are selectively executed). When there are more branches such as A, B, C, etc., the above is also similar.

The prefixes such as "first" and "second" in the embodiments of the present disclosure are only used to distinguish different description objects, and do not constitute restrictions on the position, order, priority, quantity or content of the description objects. The statement of the description object refers to the description in the context of the claims or embodiments, and should not constitute unnecessary restrictions due to the use of prefixes. For example, if the description object is a "field", the ordinal number before the "field" in the "first field" and the "second field" does not limit the position or order between the "fields", and the "first" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of description objects is not limited by the ordinal number, and can be one or more. Taking the "first apparatus" as an example, the number of "apparatuses" can be one or more. In addition, the objects modified by different prefixes may be the same or different. For example, if the description object is "apparatus", then the "first apparatus" and the "second apparatus" may be the same apparatus or different apparatuses, and their types may be the same or different. For another example, if the description object is "information", then the "first information" and the "second information" may be the same information or different information, and their contents may be the same or different.

In some embodiments, "including A", "containing A", "used to indicate A", and "carrying A" can be interpreted as directly carrying A or indirectly indicating A.

In some embodiments, terms such as "time/frequency", "time/frequency domain", etc. refer to the time domain and/or the frequency domain.

In some embodiments, terms such as "in response to...", "in response to determining...", "in the case of...", "at the time of...", "when ...", "if...", "in case of...", etc. can be used interchangeably.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, apparatuses, etc. can be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", and "subject" can be used interchangeably.

In some embodiments, "network" can be interpreted as apparatuses included in the network (e.g., access network device, core network device, etc.).

In some embodiments, the terms "access network device (AN device), "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like can be used interchangeably.

In some embodiments, the terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client and client can be used interchangeably.

In some embodiments, the access network device, the core network device, or the network device can be replaced by a terminal. For example, the various embodiments of the present disclosure can also be applied to a structure in which the communication between the access network device, the core network device, or the network device and the terminal is replaced by the communication between multiple terminals (for example, device-to-device (D2D), vehicle-to-everything (V2X), etc.). In this case, it can also be set as a structure in which the terminal has all or part of the functions of the access network device. In addition, terms such as "uplink" and "downlink" can also be replaced by terms corresponding to communication between terminals (for example, "side"). For example, uplink channels, downlink channels, etc. can be replaced by side channels, and uplinks, downlinks, etc. can be replaced by side links.

In some embodiments, the terminal may be replaced by an access network device, a core network device, or a network device. In this case, the access network device, the core network device, or the network device can also be configured to have a structure that has all or part of the functions of the terminal.

In some embodiments, acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure can be implemented as an independent embodiment, and the combination of any elements, any rows, and any columns can also be implemented as an independent embodiment.

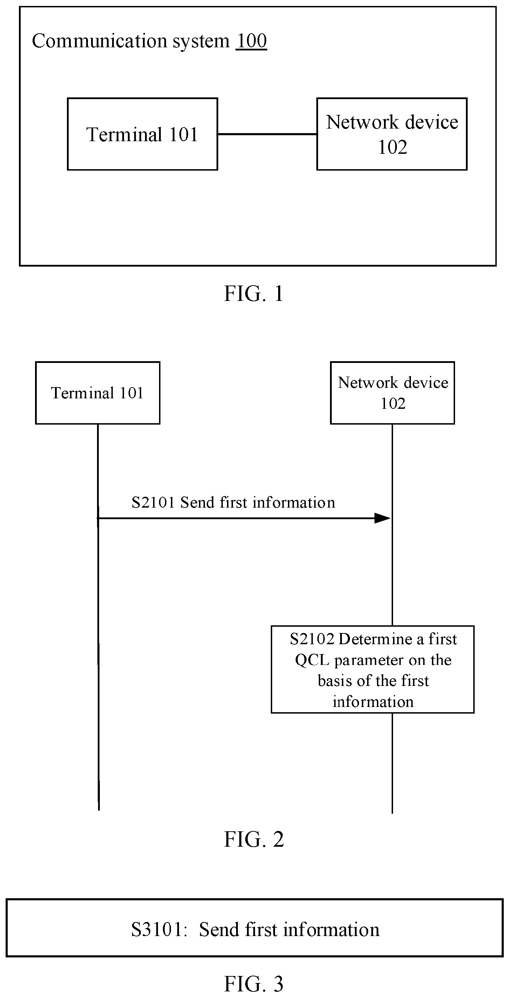

FIG. 1 is a schematic diagram of the architecture of a communication system according to an embodiment of the present disclosure.

As shown in FIG. 1, the communication system 100 includes a terminal 101 and a network device 102.

In some embodiments, the terminal 101 includes at least one of, for example, a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the network device 102 may include at least one of an access network device and a core network device.

In some embodiments, the access network device is, for example, a node or device that accesses a terminal to a wireless network. The access network device may include at least one of an evolved Node B (eNB), a next generation evolved Node B (next generation eNB, ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a Wi-Fi system, but is not limited thereto.

In some embodiments, the technical solution of the present disclosure may be applicable to the Open RAN architecture. In this case, the interfaces between access network devices or within access network devices involved in the embodiments of the present disclosure may become internal interfaces of Open RAN, and the processes and information interactions between these internal interfaces may be implemented through software or programs.

In some embodiments, the access network device may be composed of a central unit (CU) and a distributed unit (DU), where the CU may also be called a control unit. The structure adopting CU-DU may be used to split the protocol layer of the access network device, with some functions of the protocol layer being centrally controlled by the CU, and the remaining part or all of the functions of the protocol layer being distributed in the DU, and the DU being centrally controlled by the CU, but not limited thereto.

In some embodiments, the core network device may be a device including one or more network elements, or may be multiple devices or device groups, each including all or part of the one or more network elements. The network element may be virtual or physical. The core network may include, for example, at least one of the Evolved Packet Core (EPC), the 5G Core Network (5GCN), and the Next Generation Core (NGC).

It can be understood that the communication system described in the embodiments of the present disclosure is for the purpose of more clearly illustrating the technical solutions of the embodiments of the present disclosure, and does not constitute a limitation on the technical solutions proposed in the embodiments of the present disclosure. A person of ordinary skill in the art can know that with the evolution of the system architecture and the emergence of new service scenarios, the technical solutions proposed in the embodiments of the present disclosure are also applicable to similar technical problems.

The following embodiments of the present disclosure can be applied to the communication system 100 shown in FIG. 1, or part of the subject, but are not limited thereto. The subjects shown in FIG. 1 are examples, and the communication system may include all or part of the subjects in FIG. 1, or may include other subjects other than FIG. 1, and the number and form of the subjects are arbitrary, and the subjects may be physical or virtual, and the connection relationship between the subjects is an example, and the subjects may be connected or disconnected, and the connection may be in any manner, and may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device to Device (D2D) system, Machine to Machine (M2M) system, Internet of Things (IoT) system, Vehicle-to-Everything (V2X), systems using other communication methods, and next-generation systems expanded based on them. In addition, a combination of multiple systems (for example, a combination of LTE or LTE-A with 5G, etc.) can also be applied.

In the New Radio (NR), especially in the working frequency range 2, since the high-frequency channel attenuates quickly, in order to ensure the coverage range, communication requires beam-based transmission and reception.

In the discussion of R15 or R16, beam indication signaling includes the medium access control control element (MAC CE) and downlink control information (DCI).

In some embodiments, the beams of the physical downlink control channel (PDCCH) and the physical uplink control channel (PUCCH) are indicated by MAC CE, and the physical downlink shared channel (PUSCH) and the physical uplink shared channel (PUSCH) are indicated by DCI.

In some embodiments, MAC CE or DCI is also used to indicate other reference signals, including, for example, a Channel State Information Reference Signal (CSI-RS), a Sounding Reference Signal (SRS), or a Tracking Reference Signal (TRS), etc. The beam of each channel or reference signal is indicated independently.

In the discussion of R17, the concept of common beam (unified TCI state) was proposed. The common beam means that multiple channels or reference signals use the same beam. For example, a common beam of multiple channels or reference signals is indicated by using one beam indication signaling.

In some embodiments, the beam report is based on the configuration or triggering of the base station. In fact, the terminal is the first to know whether the beam needs to be updated through measurement. In this case, if the network device configures periodic beam reports, and the configured period is too short, it may cause multiple consecutive beam reports to not be updated, increasing the signaling overhead of the beam report; if the configured period is too long, it may cause the report to be sent untimely when the beam information is updated, increasing the delay.

In some embodiments, in order to reduce the signaling overhead and delay of beam report, a beam report method initiated by the terminal based on event triggering is proposed.

However, it is not yet clear what the specific content of the beam report initiated by the terminal includes.

Based on this, the embodiments of the present disclosure propose a communication method, which enables the terminal and the network device to determine the first QCL parameter based on the report content, thereby reducing the overhead of the beam indication signaling and the delay of the beam update.

FIG. 2 is an interactive schematic diagram of a communication method according to an embodiment of the present disclosure. As shown in FIG. 2, the embodiment of the present disclosure relates to a communication method, and the method includes the following steps.

In **step S2101**, the terminal 101 sends first information.

In some embodiments, the network device 102 receives first information.

In some embodiments, the first information is used to determine a first QCL parameter.

In some embodiments, the first information is used by the network device 102 to determine a first QCL parameter.

In some embodiments, the first information is used by the terminal 101 to determine a first QCL parameter.

In some embodiments, "acquire", "obtain", "get", "receive", "transmit", "bidirectional transmission", "send and/or receive" can be interchangeable, which can be interpreted as many meanings, such as receiving from other subjects, obtaining from protocols, obtaining from higher layers, obtaining by self-processing, autonomous implementation.

In some embodiments, terms such as "send", "transmit", "report", "issue", "transmit", "bidirectional transmission", "send and/or receive" can be used interchangeably.

In some embodiments, terms such as "certain", "preseted", "preset", "set", "indicated", "certain", "any", and "first" can be interchangeable, and "specific A", "preseted A", "preset A", "set A", "indicated A", "certain A", "any A", and "first A" can be interpreted as A pre-defined in a protocol, or as A obtained through setting, configuration, or indication, etc., or can be interpreted as specific A, certain A, any A, or first A, etc., but is not limited thereto.

In some embodiments, the names of information, etc. are not limited to the names recorded in the embodiments, and terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" can be used interchangeably.

In some embodiments, a new beam may be understood as being different from the current beam. For example, if the terminal 101 finds that the quality of the current beam is poor based on the measurement result of the current beam and determines that a beam switching is about to be performed, the target beam to be used for beam switching may be referred to as a new beam.

In some embodiments, the beam includes at least one of the following: spatial Rx parameter, quasi co-location (QCL) type D, spatial setting, spatial reception filter, spatial transmission filter, spatial domain filter, transmission configuration indication state (TCI state), joint TCI state, downlink TCI state (DL TCI state), uplink TCI state (DL TCI state), unified TCI state, common TCI state, and spatial relation information, etc. The beam can be replaced with any of the above.

In some embodiments, the QCL parameter includes QCL type D: spatial reception parameter.

It may be appreciated that the beam can be replaced with the QCL parameter.

In some embodiments, the QCL parameter may be referred to as QCL assumption.

It may be appreciated that the beam can be replaced with the QCL assumption.

In some embodiments, the QCL parameter also includes type A, type B, type C, where type A, type B, type C include at least one of average delay, delay spread, doppler shift, and doppler spread.

It can be understood that the beam can also be replaced with any one of type A, type B, and type C.

It can be understood that, by defining the above-mentioned new beam type, the terminal 101 can determine the corresponding type of new beam in different communication scenarios.

It should be noted that the embodiments of the present disclosure exemplarily describe the beam through the QCL parameter.

It should be noted that the first QCL parameter of the embodiments of the present disclosure can be understood as a new beam in some embodiments.

It can be understood that the first information is used to determine the first QCL parameter, including, for example, determining the content included in the first information and determining the corresponding first QCL parameter based on the content.

In some embodiments, the first information includes content for determining the first QCL parameter.

Optionally, the first information includes at least one of the following: an identifier of the first reference signal resource, a unified TCI state type, an applicable scope of the TCI state corresponding to the first reference signal resource, an event identifier, and a parameter corresponding to the first reference signal resource.

Optionally, the event is an event that triggers the terminal 101 to send the first information.

Optionally, the first reference signal resource is a reference signal resource corresponding to the first QCL parameter.

It is understandable that the first QCL parameter can be determined by one or more of the contents included in the above-mentioned first information, including, for example: determining the first QCL parameter by a reference signal resource identifier corresponding to the first QCL parameter. The first QCL parameter can also be determined by the reference signal resource identifier corresponding to the first QCL parameter and an event identifier that triggers the sending of the first information.

In some embodiments, the first reference signal resource identifier includes: a synchronization signal block (Synchronization Signal and PBCH block, SSB) identifier, and/or a channel state indication information reference signal (Channel State Information Reference Signal, CSI-RS) identifier.

In some embodiments, when the first reference signal resource identifier is an SSB identifier, the first information also includes a serving cell identifier or a non-serving cell identifier corresponding to the SSB identifier.

It can be understood that the additional Physical Cell Identifier (PCI) list includes PCIs of multiple neighboring cells and an index corresponding to each PCI.

Based on this, in some embodiments, in the case that the cell corresponding to the SSB identifier is a non-serving cell, the first information includes the index of the non-serving cell in an additional physical cell identifier list (additional PCI list).

Therefore, the corresponding neighboring cell PCI can be determined through the index in the PCI list, and then the corresponding first QCL parameter can be determined.

In some embodiments, the type of unified TCI state may include: a joint TCI state, and/or a separate TCI state.

Optionally, the first information includes a type of unified TCI state, and the type of unified TCI state includes a joint TCI state or a separate TCI state. The unified TCI state type included in the first information is a unified TCI state type reported by the terminal to the network device based on its own measurement. For example, if the terminal determines based on its own measurement that the QCL parameter corresponding to the reference signal resource can be applied to the uplink and downlink TCI states, then the unified TCI state type included in the first information is the joint TCI state. For example, if the terminal determines based on its own measurement that the QCL parameter corresponding to the reference signal resource can be applied to the downlink TCI state but not to the uplink TCI state, then the unified TCI state type included in the first information is the separate TCI state.

In some embodiments, the TCI state is used to indicate the first reference signal resource identifier corresponding to the QCL parameter, and the applicable scope of the TCI state includes at least one of the following: a joint TCI state, a downlink TCI state, or an uplink TCI state.

In some embodiments, the first information includes that the unified TCI state type is the joint TCI state, then the first information may no longer include the applicable scope of the TCI state, because the unified TCI state type being the joint TCI state means that the applicable scope of the TCI state is the joint TCI state, that is, it is applicable to the transmission of uplink and downlink channels and/or reference signals at the same time.

In some embodiments, the network device 102 configures the unified TCI state type as the joint TCI state, and the first information includes that the unified TCI state type is the joint TCI state, then the first information may no longer include the applicable scope of the TCI state, because the unified TCI state type being the joint TCI state means that the applicable scope of the TCI state is the joint TCI state, that is, it is applicable to the transmission of both uplink and downlink channels and/or reference signals at the same time.

In some embodiments, the network device 102 configures the unified TCI state type as the joint TCI state, and the first information does not include indication information of the unified TCI state type, then the first information may not include the applicable scope of the TCI state, because the unified TCI state type configured by the network device being the joint TCI state and the terminal not reporting a different unified TCI state type means that the applicable scope of the TCI state is the joint TCI state, that is, it is applicable to the transmission of both uplink and downlink channels and/or reference signals at the same time.

In some embodiments, the network device 102 configures the unified TCI state type as the joint TCI state, and the first information includes that the unified TCI state type is the separate TCI state, then the first information may include that the applicable scope of the TCI state is the downlink TCI state, that is, only applicable to the transmission of downlink channels and/or reference signals; or then the first information may include that the applicable scope of the TCI state is the uplink TCI state, that is, only applicable to the transmission of uplink channels and/or reference signals, because the unified TCI state type reported by the terminal is the separate TCI state.

In some embodiments, the first information includes the unified TCI state type as the separate TCI state, then the first information may include that the applicable scope of the TCI state is a downlink TCI state, that is, it is only applicable to the transmission of downlink channels and/or reference signals; or then the first information may include that the applicable scope of the TCI state is an uplink TCI state, that is, it is only applicable to the transmission of uplink channels and/or reference signals.

In some embodiments, the network device 102 configures the unified TCI state type as the separate TCI state, and the first information includes that the unified TCI state type is the separate TCI state, then the first information may include that the applicable scope of the TCI state is a downlink TCI state, that is, it is only applicable to the transmission of downlink channels and/or reference signals; or then the first information may include that the applicable scope of the TCI state is an uplink TCI state, that is, it is only applicable to the transmission of uplink channels and/or reference signals.

In some embodiments, the network device 102 configures the unified TCI state type as the separate TCI state, and the first information may not include indication information of the unified TCI state type, then the first information may include that the applicable scope of the TCI state is the downlink TCI state, that is, it is only applicable to the transmission of downlink channels and/or reference signals; or the first information may include that the applicable scope of the TCI state is the uplink TCI state, that is, it is only applicable to the transmission of uplink channels and/or reference signals, because the network device 102 configures the unified TCI state type as the separate TCI state and the terminal does not report a different unified TCI state type.

In some embodiments, the network device 102 configures the unified TCI state type as the separate TCI state, and the first information may include that the unified TCI state type is the joint TCI state, then the first information may not include the applicable scope of the TCI state, because the unified TCI state type reported by the terminal being a joint TCI state means that the applicable scope of the TCI state is the joint TCI state, that is, it is applicable to the transmission of both uplink and downlink channels and/or reference signals at the same time.

In some embodiments, for the uplink TCI state or the joint TCI state, the first reference signal resource included in the first information (that is, the reference signal resource corresponding to the first QCL parameter) corresponds to at least one of the following: a power headroom (power head room), a power backoff value (power back off value), and the supported maximum number of antenna ports of sounding reference signal (SRS).

It is understandable that the first information includes the above content, and the reason for the QCL parameter update can be known. For example, based on the change of the maximum permitted exposure (MPE) of the current communication scenario, it is necessary to determine the power headroom or power back off value of the reference signal resource corresponding to the first QCL parameter, and update the QCL parameter. Therefore, in the case of knowing the power headroom or power backoff value of the reference signal resource corresponding to the first QCL parameter, and the power headroom or power backoff value of the reference signal resource corresponding to the current QCL parameter, the reason for the QCL parameter update can be reversely inferred.

Optionally, the first information may also include power management-maximum power reduction (P-MPR).

It is understandable that in order to meet the MPE, the uplink transmission power of the terminal needs to be reduced, that is, power backoff. The larger the power backoff value, the smaller the transmission power corresponding to the reference signal resource. In the case that the power backoff value of the reference signal resource corresponding to the current QCL parameter is greater than the specified threshold, QCL parameter adjustment is required, such as QCL parameter update. Therefore, the power backoff value of the reference signal resource corresponding to the first QCL parameter and the power backoff value of the reference signal resource corresponding to the current QCL parameter can be compared respectively to determine whether the reason for the QCL parameter update is that the power backoff value corresponding to the current QCL parameter is too large.

Continuing with the above embodiment, it can be understood that when the P-MPR value corresponding to the reference signal resource corresponding to the first QCL parameter is greater than a specified threshold, the first information needs to include a power backoff value corresponding to the reference signal resource.

It can be understood that the supported maximum number of antenna ports of SRS is equivalent to the identifier of the terminal antenna panel corresponding to the reference signal resource. For example, the identifier of the terminal antenna panel corresponding to the first QCL parameter is, for example, an antenna panel with a port number of 2, and the terminal panel identifier corresponding to the current QCL parameter is, for example, a panel with a port number of 1. By comparing and determining that the panel identifier corresponding to the first QCL parameter is different from the panel identifier corresponding to the current QCL parameter, it can be inferred that the reason for the update of the first QCL parameter may be panel switching or panel activation or deactivation.

In some embodiments, whether the first information includes the applicable scope of the TCI state corresponding to the reference signal resource corresponding to the first QCL parameter can be divided into the following two cases:

-A) The first information does not include the applicable scope of the TCI state corresponding to the reference signal resource corresponding to the first QCL parameter.

-B) The first information includes the applicable scope of the TCI state corresponding to the reference signal resource corresponding to the first QCL parameter.

Optionally, for -A), in the case that TCI state updates with different applicable scopes correspond to different events (such as update trigger events), the first information does not include the applicable scope of the TCI state corresponding to the reference signal resource corresponding to the first QCL parameter.

Exemplarily, the identifier of the event corresponding to the joint TCI state update is #1, and the identifier of the event corresponding to the downlink TCI state update is #2. The applicable scope of the corresponding TCI state to be updated can be determined by the event identifier. Therefore, in this case, the first information may not include the applicable scope of the TCI state corresponding to the reference signal resource corresponding to the first QCL parameter. It can be understood that in this case, the applicable scope of the corresponding TCI state can also be included.

Optionally, for -B), in cases other than the case corresponding to -A), the first information includes an applicable scope of the TCI state corresponding to the reference signal resource corresponding to the first QCL parameter.

Exemplarily, in the case that there are multiple TCI state updates with different applicable scopes corresponding to the same event (e.g., an update trigger event), the first information includes the applicable scope of the TCI state corresponding to the reference signal resource corresponding to the first QCL parameter. For example, the identifier of the event corresponding to the joint TCI state update is #1, the identifier of the event corresponding to the downlink TCI state update is #2, and the identifier of the event corresponding to the uplink TCI state is #2. In this case, it is impossible to distinguish whether the applicable scope is the downlink TCI state or the uplink TCI state based on the identifier of the event alone. Therefore, the first information is required to include indication information of the applicable scope of the TCI state corresponding to the reference signal resource corresponding to the first QCL parameter.

In some embodiments, one reference signal resource may correspond to at least one event identifier.

Exemplarily, when the applicable scope of the TCI state corresponding to the reference signal resource identified as 1# is the joint TCI state, the reference signal resource identified as 1# can correspond to the event identifier corresponding to the uplink TCI state report (which can be understood as event 1#), and can also correspond to the event identifier corresponding to the downlink TCI state report (which can be understood as event 2#). It can be understood that to specifically determine which event is triggered, it is necessary to measure the corresponding parameter to determine which event triggering condition is met.

In some embodiments, the parameter corresponding to the first reference signal resource includes at least one of the following:

a layer 1 reference signal receiving power (L1-RSRP) corresponding to the first reference signal resource (that is, the reference signal resource of the first QCL parameter), the layer 1 signal to interference plus noise ratio (L1-SINR) corresponding to the first reference signal resource (that is, the reference signal resource of the first QCL parameter), the power backoff value corresponding to the reference signal resource of the first QCL parameter, or the power headroom corresponding to the reference signal resource of the first QCL parameter.

Continuing with the above embodiment, corresponding parameter measurement is performed on the reference signal resource identified as 1#, including: measuring one or more of its L1-RSRP, L1-SINR, power backoff value and power headroom, so as to determine which event triggering condition is met.

In some embodiments, the first information may be carried in second information (e.g., information for random access).

In some embodiments, the terminal 101 sends the first information by sending information for random access to the network device 102.

In some embodiments, the second information includes, for example: type A information (Message A) or type 1 information (Message 1).

Optionally, Message A includes Message 1 and the corresponding PUSCH.

Exemplarily, the network device 102 configures a corresponding relationship between a CSI-RS and a random access channel occasion (RO) and a preamble, and/or configures a corresponding relationship between an SSB and a RO and a preamble. After determining the CSI-RS or SSB corresponding to the first QCL parameter, the terminal 101 sends a random access preamble to the network device 102 through Message A or Message 1 based on the corresponding RO.

In some embodiments, in the case that the second information is information for random access, the corresponding random access procedure includes at least one of the following:
contention free based random access or contention based random access.

It is understandable that the RO may include a time domain resource and a frequency domain resource. In the case that the RO and the preamble are dedicated, the random access corresponding to the second information is the contention free based random access. In the case that the RO and the preamble are shared with other terminal(s), the random access corresponding to the second information is the contention based random access.

In some embodiments, the first information is carried in a scheduling request (SR).

In some examples, the SR resource (time-frequency resource and sequence) has a first mapping relationship with CSI-RS (which may be a one-to-one relationship or a one-to-many relationship).

In some embodiments, the SR (resource time-frequency resource and sequence) and SSB have a first mapping relationship (which may be a one-to-one relationship or a one-to-many relationship).

Based on this, the network device 102 can determine the corresponding SSB or CSI-RS based on the SR, and then determine the corresponding first QCL parameter based on the SSB or CSI-RS.

In some embodiments, the first information is carried in the SR and the uplink shared channel medium access control control element (Physical Downlink Shared Channel Media Access Control, PUSCH MAC CE).

Optionally, the PUSCH MAC CE may include the first information, and the SR is used to initiate a scheduling request, requesting the network device 102 to configure PUSCH resources.

In some embodiments, the first information is carried in a configured grant PUSCH, a dynamically scheduled (dynamic grant) PUSCH, or a PUCCH.

Optionally, the terminal 101 carries the first information based on the configured grant PUSCH resource, the dynamic grant PUSCH, or the PUCCH resource configured by the network device 102.

In some embodiments, the first condition includes an event configured by the network device.

Based on this, meeting the first condition can be understood as the case in which the event is triggered.

In some embodiments, terms such as "uplink", "UL", "physical uplink" can be interchangeable, terms such as "downlink", "DL", "physical downlink" can be interchangeable, and terms such as "side", "sidelink", "side communication", "sidelink communication", "direct connection", "direct link", "direct communication", "direct link communication" can be interchangeable.

In some embodiments, the terms "downlink control information (DCI)", "downlink (DL) assignment", "DL DCI", "uplink (UL) grant", "UL DCI" and so on can be used interchangeably.

In some embodiments, the terms "physical downlink shared channel (PDSCH)", "DL data" and the like can be interchangeable with each other, and the terms "physical uplink shared channel (PUSCH)", "UL data" and the like can be interchangeable with each other.

In some embodiments, the terms "radio", "wireless", "radio access network (RAN)", "access network (AN)", "RAN-based" and the like can be used interchangeably.

In some embodiments, terms such as "synchronization signal (SS)", "synchronization signal block (SSB)", "reference signal (RS)", "pilot", and "pilot signal" can be used interchangeably.

In some embodiments, the terms "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel" and the like are interchangeable.

In **step S2102**, the network device 102 determines a first QCL parameter based on the first information.

In some embodiments, in the case that the first information is carried in the second information and sent to the network device 102,

the network device 102 determines the corresponding SSB and/or CSI-RS based on the received preamble and/or the corresponding RO, and further determines the first QCL parameter of the corresponding SSB and/or CSI-RS.

In some embodiments, in the case that the first information is carried in the SR, after the network device 102 obtains the SR, it determines the corresponding SSB and/or CSI-RS based on the first mapping relationship or the second mapping relationship, and then determines the first QCL parameter of the corresponding SSB and/or CSI-RS.

The communication method involved in the embodiment of the present disclosure can include at least one of step S2101 to step S2102. For example, step S2101 can be implemented as an independent embodiment, step S2102 can be implemented as an independent embodiment, and step S2101+step S2102 can be implemented as independent embodiments, but is not limited thereto.

In some embodiments, step S2101 and step S2102 can be executed in an interchangeable order or simultaneously.

In some embodiments, step S2102 is optional, and one or more of these steps can be omitted or replaced in different embodiments.

In some embodiments, step S2101 is optional, and one or more of these steps can be omitted or replaced in different embodiments.

FIG. 3 is a flowchart of a communication method according to an embodiment of the present disclosure. As shown in FIG. 3, the embodiment of the present disclosure relates to a communication method, and the method includes the following steps.

In **step S3101**, first information is sent.

The optional implementation of step S3101 can refer to the optional implementation of step S2101 in FIG. 2 and other related parts in the embodiment involved in FIG. 2, which will not be described in detail here.

In some embodiments, in the case that a first condition is met, first information is sent, and the first information is used to determine a first QCL parameter.

In some embodiments, the first information includes at least one of the following: an identifier of a first reference signal resource, the first reference signal resource being a reference signal resource corresponding to the first QCL parameter; a unified transmission configuration indication (TCI) state type; an applicable scope of the TCI state corresponding to the first reference signal resource; an event identifier, the event being an event that triggers the terminal to send the first information; and a parameter corresponding to the first reference signal resource.

In some embodiments, the identifier of the first reference signal resource includes: an SSB identifier and/or a CSI-RS identifier.

In some embodiments, in the case that the SSB identifier is a non-serving cell, the first information includes an index of the non-serving cell in a physical cell identifier (PCI) list.

In some embodiments, the unified TCI state type includes: a joint TCI state, and/or a separate TCI state.

In some embodiments, the TCI state is represented based on the reported first reference signal resource, and the applicable scope of the TCI state includes at least one of the following: a joint TCI state, a downlink TCI state, an uplink TCI state.

In some embodiments, the applicable scope of the TCI state includes an uplink TCI state or a joint TCI state, and the first information includes at least one of the following items corresponding to the first reference signal resource: a power headroom, a power backoff value, the supported maximum number of antenna port(s) of sounding reference signal (SRS).

In some embodiments, each first reference signal resource corresponds to at least one event identifier.

In some embodiments, the parameter corresponding to the first reference signal resource includes at least one of the following: L1-RSRP corresponding to the first reference signal resource, L1-SINR corresponding to the first reference signal resource.

In some embodiments, the first information is carried in the second information, and the second information is information for random access.

In some embodiments, the random access procedure corresponding to the second information includes at least one of the following: contention free based random access, contention based random access.

In some embodiments, the first information is carried in a scheduling request.

In some embodiments, the scheduling request has a first mapping relationship with the CSI-RS, or the scheduling request has a second mapping relationship with the SSB.

In some embodiments, the first information is carried in a scheduling request and a PUSCH MAC CE, where the scheduling request is a scheduling request for beam report.

In some embodiments, the first information is carried in a configured grant PUSCH, a dynamic grant PUSCH, or a PUCCH.

In some embodiments, the first condition includes an event configured by the network device.

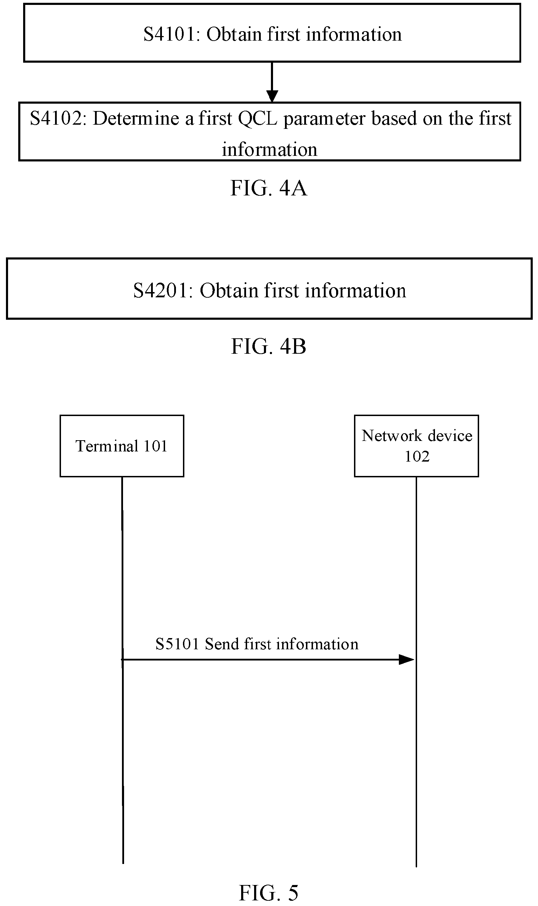

FIG. 4A is a flowchart of a communication method according to an embodiment of the present disclosure. As shown in FIG. 4A, the embodiment of the present disclosure relates to a communication method, and the method includes the following steps.

In **step S4101**, first information is obtained.

The optional implementation of step S4101 can refer to the optional implementation of step S2101 in FIG. 2 and other related parts in the embodiment involved in FIG. 2, which will not be described in detail here.

In some embodiments, the network device 102 receives the first information sent by the terminal 101, but is not limited thereto. It can receive the first message sent by other subject(s).

In some embodiments, the network device 102 obtains first information specified by the protocol.

In some embodiments, the network device 102 obtains the first information from an upper layer(s).

In some embodiments, the network device 102 performs processing to obtain the first information.

In some embodiments, step S3101 is omitted, and the network device 102 autonomously implements the function indicated by the first information, or the above function is default or by default.

In some embodiments, the terminal 101 sends the first information to the network device 102, but is not limited thereto, and the first information may also be sent to other entities.

In **step S4102**, a first QCL parameter is determined based on the first information.

The optional implementation of step S4102 can refer to the optional implementation of step S2102 in FIG. 2 and other related parts in the embodiment involved in FIG. 2, which will not be described in detail here.

The communication method involved in the embodiment of the present disclosure can include at least one of step S4101 to step S4102. For example, step S4101 can be implemented as an independent embodiment, step S4102 can be implemented as an independent embodiment, and step S4101+step S4102 can be implemented as independent embodiments, but is not limited thereto.

In some embodiments, step S4101 and step S4102 can be executed in an interchangeable order or simultaneously.

In some embodiments, step S4102 is optional, and one or more of these steps can be omitted or replaced in different embodiments.

In some embodiments, step S4101 is optional, and one or more of these steps can be omitted or replaced in different embodiments.

FIG. 4B is a flowchart of a communication method according to an embodiment of the present disclosure. As shown in FIG. 4B, the embodiment of the present disclosure relates to a communication method, and the method includes the following steps.

In **step S4201**, first information is obtained.

The optional implementation of step S4201 can refer to step S2101 in FIG. 2, step S3101 in FIG. 3, and the optional implementation of step S4101 in FIG. 4A, as well as other related parts in the embodiments involved in FIGs. 2, 3 and 4A, which will not be repeated here.

In some embodiments, in the case that a first condition is met, first information is acquired, and the first information is used to determine a first QCL parameter.

In some embodiments, the first information includes at least one of the following: an identifier of a first reference signal resource, the first reference signal resource being a reference signal resource corresponding to a first QCL parameter; a unified transmission configuration indication (TCI) state type; an applicable scope of the TCI state corresponding to the first reference signal resource; an event identifier, the event being an event that triggers the terminal to send the first information; and a parameter corresponding to the first reference signal resource.

In some embodiments, the identifier of the first reference signal resource includes: an SSB identifier and/or a CSI-RS identifier.

In some embodiments, in the case that the SSB identifier is a non-serving cell, the first information includes an index of the non-serving cell in a physical cell identifier (PCI) list.

In some embodiments, the unified TCI state type includes: a joint TCI state, and/or a separate TCI state.

In some embodiments, the TCI state is represented based on the reported first reference signal resource, and the applicable scope of the TCI state includes at least one of the following: a joint TCI state, a downlink TCI state, an uplink TCI state.

In some embodiments, the applicable scope of the TCI state includes an uplink TCI state or a joint TCI state, and the first information includes at least one of the following items corresponding to the first reference signal resource: a power headroom, a power backoff value, the supported maximum number of antenna ports of sounding reference signal (SRS).

In some embodiments, each first reference signal resource corresponds to at least one event identifier.

In some embodiments, the parameter corresponding to the first reference signal resource includes at least one of the following: L1-RSRP corresponding to the first reference signal resource, L1-SINR corresponding to the first reference signal resource.

In some embodiments, the first information is carried in the second information, and the second information is information for random access.

In some embodiments, the random access procedure corresponding to the second information includes at least one of the following: contention free based random access, contention based random access.

In some embodiments, the first information is carried in a scheduling request.

In some embodiments, the scheduling request has a first mapping relationship with the CSI-RS, or the scheduling request has a second mapping relationship with the SSB.

In some embodiments, the first information is carried in a scheduling request and a PUSCH MAC CE, where the scheduling request is a scheduling request for beam report.

In some embodiments, the first information is carried in a configured grant PUSCH, a dynamic grant PUSCH, or a PUCCH.

In some embodiments, the first condition includes an event configured by the network device.

FIG. 5 is an interactive schematic diagram of a communication method according to an embodiment of the present disclosure. As shown in FIG. 5, the embodiment of the present disclosure relates to a communication method, and the method includes the following steps.

In **step S5101**, the terminal 101 sends first information to the network device 102.

In some embodiments, in the case that a first condition is met, the terminal 101 sends first information, where the first information is used to determine a first QCL parameter.

The optional implementation of step S5101 can refer to step S2101 of FIG. 2, step S3101 of FIG. 3, step S4101 of FIG. 4A and step S4201 of FIG. 4B, as well as other related parts in the embodiments involved in FIGs. 2, 3, 4A and 4B, which will not be repeated here.

In some embodiments, the above method may include the methods described in the above-mentioned embodiments of the communication system side, terminal side, access network device side, core network device side, first network element side, second network element side, etc., which will not be repeated here.

In the embodiment of the present disclosure, a communication method is also provided, which proposes the content of the beam report initiated by the terminal based on event triggering, so that the terminal and the network device can determine the new beam based on the beam report and start using the new beam when a certain condition is met. Using this solution reduces the signaling overhead of the beam indication and can also reduce the delay of the beam update.

In some embodiments, in response to meeting a first condition, the terminal sends first information, where the first information is used to determine a new beam.

Optionally, the beam can also be referred to as any of the following: Spatial Rx parameter, Quasi co-location (QCL) Type D, spatial setting, spatial reception filter, spatial transmission filter, spatial domain filter, Transmission configuration indicator (TCI state), joint TCI state, Downlink TCI state (DL TCI state), Uplink TCI state (DL TCI state), unified TCI state, common TCI state, and spatial relation information, etc.

In some embodiments, the first information includes at least one of the following: at least one reference signal resource identifier (ID) for determining a new beam, adopted unified TCI state type, a TCI state corresponding to the reference signal resource, an event identifier corresponding to triggering the first information, a reported L1-RSRP corresponding to a specified reference signal resource, a reported L1-SINR corresponding to the specified reference signal resource.

Optionally, the reference signal resource ID includes: SSB ID or CSI-RS ID.

Optionally, the SSB ID corresponds to and indicates a serving cell or a non-serving cell. In the case of the non-serving cell, it indicates the index of the non-serving cell in the physical cell identifier (PCI) list.

Optionally, the adopted unified TCI state type includes a joint TCI state or a separate TCI state.

Optionally, the TCI state corresponding to the reference signal resource includes at least one of the following: a joint TCI state, a downlink TCI state, or an uplink TCI state.

Optionally, the TCI state does not include the joint TCI state in the following cases:

if the terminal has indicated that the unified TCI state type is a joint TCI state, or the network device has configured the unified TCI state type as a joint TCI state and the terminal cannot change it, then the joint TCI state may not be required.

Optionally, the TCI state includes the joint TCI state in the following case:
if there is no unified TCI state type, and the unified TCI state type configured by the network device can be changed by the terminal, then the joint TCI state can be included in the beam report.

Optionally, in the following cases, the TCI state includes the uplink TCI state or the downlink TCI state:
this is only required when the network device configures the separate TCI state type as separate or the terminal indicates the unified TCI state as separate state in *b*; or
the first information does not include the unified TCI state type.

In some embodiments, the beam update reason (for example, caused by MPE or caused by switching terminals) may be informed through the following dedicated (uplink TCI anchor (reference)) reference signal resources:
the power headroom corresponding to the reference signal resource, P-MPR (in order to meet MPE, whether the P-MPR corresponding to the reference signal resource is lower than P-MPR_00), MPE (if P is displayed to be greater than P-MPR_00, MPE indicates the power backoff value corresponding to the reference signal resource), and the supported maximum number of antenna ports of SRS corresponding to the reference signal resource.

Optionally, for the event identifier corresponding to triggering the first information, if the updates of the joint TCI state, the downlink TCI state, and the uplink TCI state correspond to different events, then when the event identifier is indicated, it is no longer necessary to indicate whether the reference signal resource is used for the joint TCI state, the downlink TCI state, or the uplink TCI state. Otherwise, the event identifier and the indication of whether the reference signal resource is used for the joint TCI state, the downlink TCI state, or the uplink TCI state can coexist.

Optionally, one reference signal resource may correspond to at least one event identifier, that is, may correspond to one or more event identifiers. For example, if the reference signal resource *e* needs to be used for uplink TCI state, or joint TCI state, a relatively high L1-RSRP/L1-SINR is required, and it is also necessary that the MPE is relatively small.

In some embodiments, the first information is carried in Msg 1 or Msg A (Msg A includes Msg 1 and PUSCH) in a random procedure.

Optionally, the network device configures the corresponding relationship between CSI-RS or SSB and random access resources including RO (RACH occasion, including time domain and frequency domain resources), preamble, etc. After determining the CSI-RS or SSB corresponding to the new beam, the terminal sends a random access preamble (contained in MSg 1 or Msg A) based on the random access resource corresponding to the CSI-RS or SSB. The network device determines the SSB according to the received preamble and the corresponding RO, and further determines the CSI-RS or SSB corresponding to the new beam, thereby determining the new beam.

Optionally, the random access can be contention free based random access, that is, the preamble and RO are dedicated, or can be contention based random access (that is, the preamble and RO may collide with other UEs).

In some embodiments, the first information is carried in a scheduling request.

Optionally, the network device configures the corresponding relationship (one-to-many or one-to-one) between SR resources (time-frequency resources and sequences) and CSI-RS or SSB. After determining the CSI-RS or SSB corresponding to the new beam, the terminal sends SR based on the SR resource corresponding to the CSI-RS or SSB. The network device determines the CSI-RS or SSB according to the received SR, thereby determining the new beam.

In some embodiments, the first information is carried in SR and PUSCH MAC CE, where PUSCH MAC CE includes the first information, and SR is used to initiate a scheduling request to request the network side to configure PUSCH resources.

In some embodiments, the first information is carried in a CG PUSCH or PUCCH. The CG PUSCH or PUCCH resource configured by the network device is received.

In some embodiments, the first condition includes a triggering event configured by the network device.

In the embodiments of the present disclosure, part or all of the steps and their optional implementations can be arbitrarily combined with part or all of the steps in other embodiments, or can be arbitrarily combined with optional implementations of other embodiments.

The embodiments of the present disclosure also propose an apparatus for implementing any of the above methods, for example, an apparatus is proposed, the above apparatus includes a unit or module for implementing each step performed by the terminal in any of the above methods. For another example, another apparatus is also proposed, including a unit or module for implementing each step performed by the network device (such as an access network device, a core network function node, a core network device, etc.) in any of the above methods.

It should be understood that the division of the units or modules in the above apparatus is only a division of logical functions, which can be fully or partially integrated into one physical entity or physically separated in actual implementation. In addition, the units or modules in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of hardware circuits, and the functions of some or all of the units or modules may be implemented by designing the hardware circuits. The hardware circuits may be understood as one or more processors; for example, in one implementation, the hardware circuits are application-specific integrated circuits (ASICs), and the functions of some or all of the above units or modules may be implemented by designing the logical relationship of the components in the circuits; for another example, in another implementation, the hardware circuits may be implemented by programmable logic devices (PLDs), and Field Programmable Gate Arrays (FPGAs) may be used as an example, which may include a large number of logic gate circuits, and the connection relationship between the logic gate circuits may be configured by the configuration files, thereby implementing the functions of some or all of the above units or modules. All units or modules of the above apparatuses may be implemented in the form of software called by the processor, or in the form of hardware circuits, or in the form of software called by the processor, and the remaining part may be implemented in the form of hardware circuits.

In the embodiments of the present disclosure, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP); in another implementation, the processor may implement certain functions through the logical relationship of the hardware circuit, and the logical relationship of the above hardware circuit may be fixed or reconfigurable, for example, the processor is a hardware circuit implemented by an application-specific integrated circuit (ASIC) or a programmable logic device (PLD), such as an FPGA. In a reconfigurable hardware circuit, the process of the processor loading a configuration file to implement the hardware circuit configuration may be understood as the process of the processor loading instructions to implement the functions of some or all of the above units or modules. In addition, it can also be a hardware circuit designed for artificial intelligence, which can be understood as ASIC, such as Neural Network Processing Unit (NPU), Tensor Processing Unit (TPU), Deep Learning Processing Unit (DPU), etc.

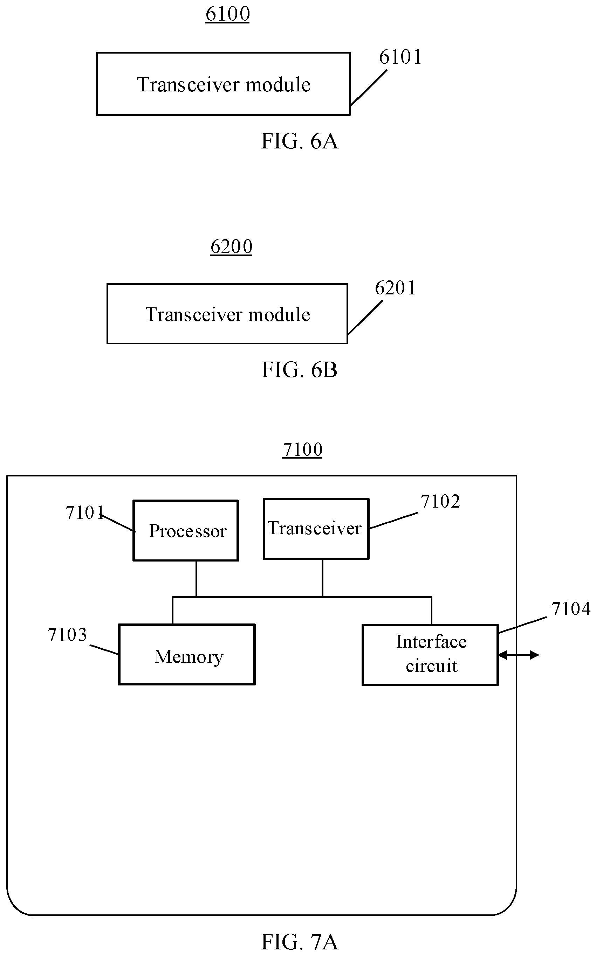

FIG. 6A is a schematic diagram of the structure of a terminal proposed in an embodiment of the present disclosure. As shown in FIG. 6A, the terminal 6100 may include: a transceiver module 6101. In some embodiments, the transceiver module 6101 is configured to send first information in the case that a first condition is met, and the first information is used to determine a first QCL parameter. Optionally, the transceiver module is configured to execute at least one of the communication steps such as sending and/or receiving (such as step S2101, but not limited thereto) performed by the terminal 101 in any of the above methods, which are not repeated here.

In some embodiments, the first information includes at least one of the following: an identifier of a first reference signal resource, the first reference signal resource being a reference signal resource corresponding to the first QCL parameter; a unified transmission configuration indication (TCI) state type; an applicable scope of the TCI state corresponding to the first reference signal resource; an event identifier, the event being an event that triggers the terminal to send the first information; and a parameter corresponding to the first reference signal resource.

In some embodiments, the identifier of the first reference signal resource includes: an SSB identifier and/or a CSI-RS identifier.

In some embodiments, in the case that the SSB identifier is a non-serving cell, the first information includes an index of the non-serving cell in a physical cell identifier (PCI) list.

In some embodiments, the unified TCI state type includes: a joint TCI state, and/or a separate TCI state.

In some embodiments, the TCI state is represented based on the reported first reference signal resource, and the applicable scope of the TCI state includes at least one of the following: a joint TCI state, a downlink TCI state, an uplink TCI state.

In some embodiments, the applicable scope of the TCI state includes an uplink TCI state or a joint TCI state, and the first information includes at least one of the following items corresponding to the first reference signal resource: a power headroom, a power backoff value, the supported maximum number of antenna ports of sounding reference signal (SRS).

In some embodiments, each first reference signal resource corresponds to at least one event identifier.

In some embodiments, the parameter corresponding to the first reference signal resource includes at least one of the following: L1-RSRP corresponding to the first reference signal resource, L1-SINR corresponding to the first reference signal resource.

In some embodiments, the first information is carried in second information, and the second information is information for random access.

In some embodiments, the random access procedure corresponding to the second information includes at least one of the following: contention free based random access, contention based random access.

In some embodiments, the first information is carried in a scheduling request.

In some embodiments, the scheduling request has a first mapping relationship with the CSI-RS, or the scheduling request has a second mapping relationship with the SSB.

In some embodiments, the first information is carried in a scheduling request and a PUSCH MAC CE, where the scheduling request is a scheduling request for beam report.

In some embodiments, the first information is carried in a configured grant PUSCH, a dynamic grant PUSCH, or a PUCCH.

In some embodiments, the first condition comprises an event configured by the network device.

FIG. 6B is a schematic diagram of the structure of a network device proposed in an embodiment of the present disclosure. As shown in FIG. 6B, the network device 6200 may include: a transceiver module 6201. In some embodiments, the transceiver module 6201 is configured to obtain first information in the case that a first condition is met, and the first information is used to determine a first QCL parameter. Optionally, the transceiver module is configured to perform at least one of the communication steps such as sending and/or receiving performed by the network device 102 in any of the above methods (such as step S2101, but not limited thereto), which will not be repeated here.

In some embodiments, the network device 6200 may further include a processing module for determining a first QCL parameter based on the first information.

In some embodiments, the first information includes at least one of the following: an identifier of a first reference signal resource, the first reference signal resource being a reference signal resource corresponding to the first QCL parameter; a unified transmission configuration indication (TCI) state type; an applicable scope of the TCI state corresponding to the first reference signal resource; an event identifier, the event being an event that triggers the terminal to send the first information; a parameter corresponding to the first reference signal resource.

In some embodiments, the identifier of the first reference signal resource includes: an SSB identifier and/or a CSI-RS identifier.

In some embodiments, in the case the SSB identifier is a non-serving cell, the first information includes an index of the non-serving cell in a physical cell identifier (PCI) list.

In some embodiments, the unified TCI state type includes: a joint TCI state, and/or a separate TCI state.

In some embodiments, the TCI state is represented based on the reported first reference signal resource, and the applicable scope of the TCI state includes at least one of the following: a joint TCI state, a downlink TCI state, an uplink TCI state.

In some embodiments, the applicable scope of the TCI state includes an uplink TCI state or a joint TCI state, and the first information includes at least one of the following items corresponding to the first reference signal resource: a power headroom, a power backoff value, the supported maximum number of antenna ports of sounding reference signal (SRS).

In some embodiments, each first reference signal resource corresponds to at least one event identifier.

In some embodiments, the parameter corresponding to the first reference signal resource includes at least one of the following: L1-RSRP corresponding to the first reference signal resource, L1-SINR corresponding to the first reference signal resource.

In some embodiments, the first information is carried in the second information, and the second information is information for random access.

In some embodiments, the random access procedure corresponding to the second information includes at least one of the following: contention free based random access, contention based random access.

In some embodiments, the first information is carried in a scheduling request.

In some embodiments, the scheduling request has a first mapping relationship with the CSI-RS, or the scheduling request has a second mapping relationship with the SSB.

In some embodiments, the first information is carried in a scheduling request and a PUSCH MAC CE, where the scheduling request is a scheduling request for beam report.

In some embodiments, the first information is carried in a configured grant PUSCH, a dynamic grant PUSCH, or a PUCCH.

In some embodiments, the first condition includes an event configured by the network device.

FIG. 7A is a schematic diagram of the structure of a communication device 7100 proposed in an embodiment of the present disclosure. The communication device 7100 may be a network device (e.g., an access network device, a core network device, etc.), or a terminal (e.g., a user equipment, etc.), or a chip, a chip system, or a processor that supports the network device to implement any of the above methods, or a chip, a chip system, or a processor that supports the terminal to implement any of the above methods. The communication device 7100 may be used to implement the methods described in the above method embodiments, and the details may refer to the description in the above method embodiments.

As shown in FIG. 7A, the communication device 7100 includes one or more processors 7101. The processor 7101 may be a general-purpose processor or a dedicated processor, for example, a baseband processor or a central processing unit. The baseband processor may be used to process the communication protocol and the communication data, and the central processing unit may be used to control the communication apparatus (such as a base station, a baseband chip, a terminal device, a terminal device chip, a DU or a CU, etc.), execute the program, and process the data of the program. Optionally, the communication device 7100 is used to execute any of the above methods. Optionally, one or more processors 7101 are used to call instructions so that the communication device 7100 executes any of the above methods.

In some embodiments, the communication device 7100 further includes one or more transceivers 7102. When the communication device 7100 includes one or more transceivers 7102, the transceiver 7102 performs at least one of the communication steps such as sending and/or receiving in the above methods (for example, step S2102, but not limited thereto), and the processor 7101 performs at least one of the other steps (for example, step S2101, but not limited thereto). In an optional embodiment, the transceiver may include a receiver and/or a transmitter, and the receiver and the transmitter may be separate or integrated. Optionally, the terms transceiver, transceiver unit, transceiver machine, transceiver circuit, interface circuit, interface, etc. may be replaced with each other, the terms transmitter, transmitting unit, transmitter machine, transmitting circuit, etc. may be replaced with each other, and the terms receiver, receiving unit, receiver machine, receiving circuit, etc. may be replaced with each other.

In some embodiments, the communication device 7100 further includes one or more memories 7103 for storing data. Optionally, all or part of the memories 7103 may also be outside the communication device 7100. In an optional embodiment, the communication device 7100 may include one or more interface circuits 7104. Optionally, the interface circuit 7104 is connected to the memory 7103, and the interface circuit 7104 may be used to receive data from the memory 7103 or other apparatuses, and may be used to send data to the memory 7103 or other apparatuses. For example, the interface circuit 7104 may read the data stored in the memory 7103 and send the data to the processor 7101.

The communication device 7100 described in the above embodiments may be a network device or a terminal, but the scope of the communication device 7100 described in the present disclosure is not limited thereto, and the structure of the communication device 7100 may not be limited by FIG. 7A. The communication device may be an independent device or may be part of a relatively large device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others, etc.

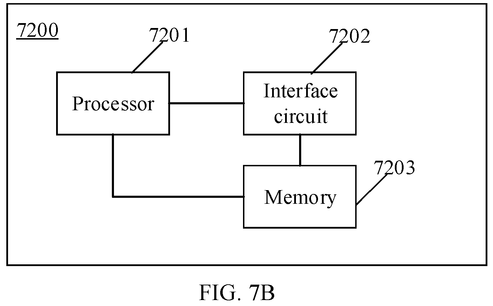

FIG. 7B is a schematic diagram of the structure of a chip 7200 provided in an embodiment of the present disclosure. In the case where the communication device 7100 may be a chip or a chip system, reference may be made to the schematic diagram of the structure of the chip 7200 shown in FIG. 7B, but the present disclosure is not limited thereto.

The chip 7200 includes one or more processors 7201. The chip 7200 is configured to execute any of the above methods.

In some embodiments, the chip 7200 further includes one or more interface circuits 7202. Optionally, the terms interface circuit, interface, transceiver pin, etc. can be interchangeable. In some embodiments, the chip 7200 further includes one or more memories 7203 for storing data. Optionally, all or part of the memory 7203 can be outside the chip 7200. Optionally, the interface circuit 7202 is connected to the memory 7203, and the interface circuit 7202 can be used to receive data from the memory 7203 or other apparatuses, and the interface circuit 7202 can be used to send data to the memory 7203 or other apparatuses. For example, the interface circuit 7202 can read the data stored in the memory 7203 and send the data to the processor 7201.

In some embodiments, the interface circuit 7202 performs at least one of the communication steps such as sending and/or receiving in the above methods (for example, step S2102, but not limited thereto). The interface circuit 7202 performs the communication steps such as sending and/or receiving in the above methods, for example, it means that the interface circuit 7202 performs data interaction between the processor 7201, the chip 7200, the memory 7203, or the transceiver device. In some embodiments, the processor 7201 performs at least one of the other steps (for example, step S2101, but not limited thereto).

The modules and/or devices described in the embodiments such as virtual apparatuses, physical apparatuses, chips, etc. can be combined or separated as needed. Optionally, some or all steps can also be performed by multiple modules and/or devices in collaboration, which is not limited here.

The present disclosure also proposes a storage medium, on which instructions are stored, and when the instructions are executed on the communication device 7100, the communication device 7100 executes any of the above methods. Optionally, the storage medium is an electronic storage medium. Optionally, the storage medium is a computer-readable storage medium, but is not limited thereto, and it can also be a storage medium readable by other apparatuses. Optionally, the storage medium can be a non-transitory storage medium, but is not limited thereto, and it can also be a temporary storage medium.

The present disclosure also proposes a program product, which, when executed by the communication device 7100, enables the communication device 7100 to execute any of the above methods. Optionally, the program product is a computer program product.

The present disclosure also proposes a computer program, which, when executed on a computer, causes the computer to execute any one of the above methods.

## Claims

1. A communication method, comprising:
in a case that a first condition is met, sending, by a terminal, first information to a network device, wherein the first information is used to determine a first QCL parameter.

2. The method according to claim 1, wherein the first information comprises at least one of:
an identifier of a first reference signal resource, wherein the first reference signal resource is a reference signal resource corresponding to the first QCL parameter;
a unified transmission configuration indication (TCI) state type;
an applicable scope of a TCI state corresponding to the first reference signal resource;
an event identifier, wherein the event is an event that triggers the terminal to send the first information; and
a parameter corresponding to the first reference signal resource.

3. The method according to claim 2, wherein the identifier of the first reference signal resource comprises:
a synchronization signal block (SSB) identifier; and/or
a channel state information reference signal (CSI-RS) identifier.

4. The method according to claim 3, wherein in a case that the SSB identifier is a non-serving cell, the first information comprises an index of the non-serving cell in a physical cell identifier (PCI) list.

5. The method according to claim 2, wherein the unified TCI state type comprises:
a joint TCI state, and/or a separate TCI state.

6. The method according to claim 2, wherein the TCI state is represented based on a reported first reference signal resource, and the applicable scope of the TCI state comprises at least one of:
a joint TCI state;
a downlink TCI state;
an uplink TCI state.

7. The method according to claim 6, wherein the applicable scope of the TCI state comprises the uplink TCI state or the joint TCI state, and the first information comprises at least one of following items corresponding to the first reference signal resource:
a power headroom;
a power back-off amount;
a supported maximum number of antenna ports of sounding reference signal (SRS).

8. The method according to claim 2, wherein each first reference signal resource corresponds to at least one event identifier.

9. The method according to claim 2, wherein the parameter corresponding to the first reference signal resource comprises at least one of:
a layer 1 reference signal received power (L1-RSRP) corresponding to the first reference signal resource;
a layer 1 signal to interference plus noise ratio (L1-SINR) corresponding to the first reference signal resource.

10. The method according to claim 1, wherein the first information is carried in second information, and the second information is information for random access.

11. The method according to claim 10, wherein a random access procedure corresponding to the second information comprises at least one of:
a contention free based random access;
a contention based random access.

12. The method according to claim 1, wherein the first information is carried in a scheduling request.

13. The method according to claim 12, wherein the scheduling request has a first mapping relationship with a CSI-RS, or the scheduling request has a second mapping relationship with an SSB.

14. The method according to claim 1, wherein the first information is carried in a scheduling request and a physical uplink shared channel medium access control control element (PUSCH MAC CE), wherein the scheduling request is a scheduling request for beam report.

15. The method according to claim 1, wherein the first information is carried in a configured grant physical uplink shared channel (PUSCH) or a physical uplink control channel (PUCCH).

16. The method according to claim 1, wherein the first condition comprises an event configured by the network device.

17. A communication method, comprising:
in a case that a first condition is met, receiving, by a network device, first information sent by a terminal, wherein the first information is used to determine a first QCL parameter.

18. The method according to claim 17, wherein the first information comprises at least one of:
an identifier of a first reference signal resource, wherein the first reference signal resource is a reference signal resource corresponding to the first QCL parameter;
a unified transmission configuration indication (TCI) state type;
an applicable scope of a TCI state corresponding to the first reference signal resource;
an event identifier, wherein the event is an event that triggers the terminal to send the first information;
a parameter corresponding to the first reference signal resource.

19. The method according to claim 18, wherein the identifier of the first reference signal resource comprises:
a synchronization signal block (SSB) identifier, and/or
a channel state information reference signal (CSI-RS) identifier.

20. The method according to claim 19, wherein in a case that the SSB identifier is a non-serving cell, the first information comprises an index of the non-serving cell in a physical cell identifier (PCI) list.

21. The method according to claim 18, wherein the unified TCI state type comprises:
a joint TCI state, and/or a separate TCI state.

22. The method according to claim 18, wherein the TCI state is represented based on a reported first reference signal resource, and the applicable scope of the TCI state comprises at least one of:
a joint TCI state;
a downlink TCI state;
an uplink TCI state.

23. The method according to claim 22, wherein the applicable scope of the TCI state comprises the uplink TCI state or the joint TCI state, and the first information comprises at least one of following items corresponding to the first reference signal resource:
a power headroom;
a power back-off amount;
a supported maximum number of antenna ports of sounding reference signal (SRS).

24. The method according to claim 18, wherein each first reference signal resource corresponds to at least one event identifier.

25. The method according to claim 18, wherein the parameter corresponding to the first reference signal resource comprises at least one of:
a layer 1 reference signal received power (L1-RSRP) corresponding to the first reference signal resource;
a layer 1 signal to interference plus noise ratio (L1-SINR) corresponding to the first reference signal resource.

26. The method according to claim 17, wherein the first information is carried in second information, and the second information is information for random access.

27. The method according to claim 26, wherein a random access procedure corresponding to the second information comprises at least one of:
a contention free based random access;
a contention based random access.

28. The method according to claim 17, wherein the first information is carried in a scheduling request.

29. The method according to claim 28, wherein the scheduling request has a first mapping relationship with a CSI-RS, or the scheduling request has a second mapping relationship with an SSB.

30. The method according to claim 17, wherein the first information is carried in a scheduling request and a physical uplink shared channel medium access control control element (PUSCH MAC CE), wherein the scheduling request is a scheduling request for beam report.

31. The method according to claim 17, wherein the first information is carried in a configured grant physical uplink shared channel (PUSCH) or a physical uplink control channel (PUCCH).

32. The method according to claim 17, wherein the first condition comprises an event configured by the network device.

33. A communication method, comprising:
in a case that a first condition is met, the terminal sending first information, wherein the first information is used to determine a first QCL parameter; and
a network device receiving the first information sent by the terminal.

34. A terminal, comprising:
a transceiver module, configured to send first information in a case that a first condition is met, wherein the first information is used to determine a first QCL parameter.

35. A network device, comprising:
a transceiver module, configured to obtain first information in a case that a first condition is met, wherein the first information is used to determine a first QCL parameter.

36. A terminal, comprising:
one or more processors;
wherein the processor is configured to execute the communication method according to any one of claims 1 to 16.

37. A network device, comprising:
one or more processors;
wherein the processor is configured to execute the communication method according to any one of claims 17 to 32.

38. A communication system, comprising a terminal and a network device, wherein the terminal is configured to implement the communication method according to any one of claims 1 to 16, and the network device is configured to implement the communication method according to any one of claims 17 to 32.

39. A storage medium storing instructions, wherein when the instructions are executed on a communication device, the communication device executes the communication method according to any one of claims 1 to 16 or 17 to 32.
